# EUROPEAN PATENT APPLICATION

(11) **EP 0 971 302 A1**
(43) Date of publication of application: **12.01.2000**
(21) Application number: 99202073.5
(22) Date of filing: 26.06.1999
(51) Int. Cl.: G06F 17/60

(54) **Progressive coupon system**

(30) Priority: 30.06.1998 US 107691
(71) Applicant: SUN MICROSYSTEMS, INC., Palo Alto, California 94303 (US)
(72) Inventor: Ziegler, Jonathan B., Cupertino, CA 92014 (US)
(74) Representative: Hanna, Peter William Derek

(57) **Abstract**

One embodiment of the present invention provides a method and an apparatus for facilitating a progressive coupon scheme in which the use of a coupon creates another coupon that the purchaser can use in a subsequent purchase transaction. The method includes defining (**402**) and storing (**404**) the progressive coupon scheme, which specified how use of a first coupon leads to generation of a second coupon. Upon receiving (**310, 406**) the first coupon as part of a purchase transaction, the system identifies (**408**) the first coupon by examining an identifier in the first coupon. Next, it associates (**410**) the first coupon with the second coupon by looking up the first coupon in the stored progressive coupon scheme. Finally, the system issues (**412**) the second coupon to the purchaser to be used in a subsequent purchase transaction by the purchaser. The second coupon may differ from the first coupon in a number of ways: the second coupon may have a greater monetary value than the first coupon; it may apply to different goods and services than the first coupon; and the value of the second coupon might be randomly determined. In a variation on the above embodiment, act of defining the progressive coupon scheme includes specifying a chain of coupons, wherein each successive coupon in the chain is generated in response to redemption of a preceding coupon in the chain. In another variation, the first coupon and the second coupon take the form of electronic coupons that can be communicated through a communication channel (**100**).

## Description

### BACKGROUND

The present invention relates to coupons used in connection with a purchase of goods or services. More specifically, the present invention relates to automated systems for processing and generating coupons.

Coupons have been used for many years as a way to entice customers to purchase products and services. A coupon typically takes the form of an advertisement in a newspaper or a coupon booklet that can be exchanged for a discount on the purchase of a good or a service. Coupons provide a number of benefits. First, they act as advertising for a specific retailer or a specific product. Even if a consumer does not use a coupon, the consumer is made aware of the retailer or the product simply by viewing the coupon. Second, by enticing a customer into a store to purchase a product, the store can benefit from additional purchases the customer makes while in the store. Additionally, if a customer is enticed to purchase a product for the first time and is happy with the product, the consumer is likely to continue buying the product. Thus, coupons can potentially create brand loyalty.

People are beginning to apply computer technology to improve the way in which coupons are distributed and the way in which coupons are processed. Grocery store cash registers are typically equipped with an optical scanner that can read bar codes printed on coupons to reduce the time required to process coupons during a purchase transaction. Additionally, grocery store cash registers are often integrated with a computer system that automatically prints a coupon for a product in response to a purchase of a competing product. This coupon will hopefully entice a regular purchaser of a competing product to switch to the product. Such a system is described in U.S. Patent No. 4,723,212, entitled "Method and Apparatus for Dispensing Discount Coupons," to Mindrum, et al.

Another system issues "exchange system coupons" in exchange for conventional coupons. These "exchange system coupons" are only applicable to the retail store entered, which provides a significant benefit for the retail store. Consumers are enticed to use these exchange system coupons by games and prizes associated with the exchange system coupons. A system of this type is described in U.S. Patent No. 5,483,049, entitled "Coupon Exchanging and Check Writing System" to Everett E. Schultze, Jr.

Each of the above-mentioned systems provides some commercial advantages. However, none of these systems taps the potential advantages of conditioning receipt of a coupon upon use of a prior coupon.

### SUMMARY

One embodiment of the present invention provides a method and an apparatus for facilitating a progressive coupon scheme in which the use of a coupon creates another coupon that the purchaser can use in a subsequent purchase transaction. The method includes defining and storing the progressive coupon scheme, which specifies how use of a first coupon leads to generation of a second coupon. Upon receiving the first coupon as part of a purchase transaction, the system identifies the first coupon by examining an identifier in the first coupon. Next, it associates the first coupon with the second coupon by looking up the first coupon in the stored progressive coupon scheme. Finally, the system issues the second coupon to the purchaser to be used in a subsequent purchase transaction by the purchaser.

The second coupon may differ from the first coupon in a number of ways: the second coupon may have a greater monetary value than the first coupon; it may apply to different goods and services than the first coupon; and the value of the second coupon might be randomly determined.

To this end, the progressive coupon schemes can vary in a number of ways. The scheme may be known or unknown to the coupon user. The scheme may be static, or it may be dynamically determined; for example, at a time subsequent to issuance of the coupon. Additionally, the scheme may be ordered according to a preset succession of coupons, or the scheme may be arbitrary and subject to a certain degree of randomness.

In a variation on the above embodiment, the act of defining the progressive coupon scheme includes specifying a chain of coupons, wherein each successive coupon in the chain is generated in response to redemption of a preceding coupon in the chain.

In another variation, the first coupon and the second coupon take the form of electronic coupons that can be communicated through a communication channel; for example, a computer network, a telephone network, or a computer readable storage medium, such as a disk.

Thus, the present invention facilitates a progressive coupon scheme in which use of a coupon generates a subsequent coupon that the purchaser can use for a subsequent purchase. If coupons in the scheme offer progressively larger discounts, a purchaser may be enticed to make a string of purchases in order to receive the larger discounts. If successive coupons apply to different goods and services than previous coupons, the progressive coupon scheme can be used to cross-market the different goods and services. If the value of the second coupon is randomly determined, a purchaser may be enticed by element of chance in possibly receiving a valuable coupon.

### BRIEF DESCRIPTION OF THE FIGURES

FIG. 1 illustrates a distributed computer system in accordance with an embodiment of the present invention.
FIG. 2 illustrates part of the structure of a coupon designed for use in a progressive coupon scheme in accordance with an embodiment of the present invention.
FIG. 3 is a flow chart illustrating how a first coupon is exchanged for a second coupon in accordance with an embodiment of the present invention.
FIG. 4 is a flow chart illustrating how a coupon server processes a request for a successive coupon in accordance with an embodiment of the present invention.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

### Distributed System

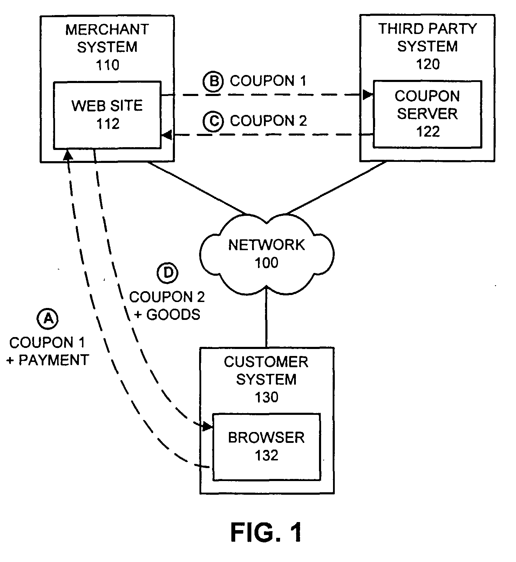

FIG. 1 illustrates a distributed computer system in accordance with an embodiment of the present invention. In this embodiment, merchant system 110 is coupled to third party system 120 and customer system 130 through network 100. Network 100 generally refers to any type of wire or wireless link between computers, including, but not limited to, a local area network, a wide area network, or a combination of networks. In one embodiment of the present invention, network 100 includes the Internet. Merchant system 110 and third party system 120 can be any nodes on a computer network that include a mechanism for servicing requests from other applications for access to services involving computational or data storage resources. Customer system 130 can be any node on a computer network 100 that is able to communicate with merchant system 110 for purposes of engaging in financial transactions with merchant system 110.

Merchant system 110 includes website 112. Website 112 provides a location on a network, such as the Internet, containing one or more inter-linked screens of graphical images and/or text, and including a means for navigating through the screens. Websites, such as website 112, typically contain links to other websites. In this illustrated embodiment, website 112 resides on merchant system 110, and is used to sell goods or services provided by the owner of merchant system 110. For example, website 112 may sell computer software across network 100. To this end, website 112 allows a customer to browse through the merchandise offered for sale, and to place an order for specific items of merchandise.

Correspondingly, customer system 130 includes browser 132, which can be used to browse through various websites on network 100, including website 112 on merchant system 110. Browser 132 may include the Netscape Navigator 3.0 browser produced and distributed by Netscape Communications Corporation of Mountain View, California.

Third party system 120 includes coupon server 122, which provides a progressive coupon scheme as a service that can be accessed by other applications across network 100. Coupon server 122 includes code and data that can be used to issue subsequent coupons as part of a progressive coupon scheme.

The system illustrated in FIG. 1 operates as follows. A user operating browser 132 navigates through website 112 on merchant system 110. After the user selects an item to purchase from website 112, such as a piece of computer software, the user pays for the item with a payment and coupon-1 (Step A). Website 112 receives the payment and coupon-1, and forwards coupon-1 to coupon server 122 (step B). Coupon server 122 receives coupon-1 and in exchange issues coupon-2 to website 112 (step C).

If coupon server 122 determines that coupon-1 is invalid, it returns an error condition to website 112 instead of coupon-2. At this point any number of actions can be taken: coupon server 122 can decide to honor the coupon; coupon server 122 can offer a new replacement coupon to the user; or coupon server 122 can simply reject the transaction.

Finally, if the transaction ultimately goes through, or if coupon-1 is determined to be valid, website 112 returns coupon-2 and delivers the goods to customer system 130 (step D). Once coupon-2 has been returned to browser 132 it can be used in a subsequent transaction involving the same or a different product from website 112.

In the embodiment illustrated in FIG. 1, coupons are in electronic form. This makes handling of the coupons easier for both the merchant and the customer. Electronic coupons are easy to process for the merchant because they can be processed automatically as part of a purchase transaction, without requiring human labor to handle physical coupons. Electronic coupons are also easy to use for the customer. The customer does not have to remember to bring a physical coupon to a purchase transaction, because the coupon is stored on the customer's computer system from where it is always accessible. Additionally, it is possible to design software for the customer's computer system so that a coupon is automatically applied to a purchase transaction if the coupon exists on the customer's computing system. In this case, the customer may not even have to remember that he has the coupon because it will be applied automatically by the system. Electronic coupons can be stored on a computer readable storage medium, which may include, but is not limited to, semiconductor memory devices, magnetic and optical storage devices such as disk drives, magnetic tape, CDs (compact discs) and DVDs (digital video discs), and computer instruction signals embodied in a carrier wave.

Although in the above embodiment website 112, coupon server 122 and browser 132 reside on separate computer systems, this need not be the case. For example, the functions of coupon server 122 and website 112 may be combined in a single computing node, and possibly into a single application. This makes sense if the merchant provides the progressive coupon scheme. On the other hand, if the progressive coupon scheme is a service provided by a third party, coupon server 122 will most likely exist on a separate computing node belonging to the third party.

Other arrangements are possible. For example, browser 132 and coupon server 122 may reside on the same computing node, or browser 132 and website 112 may reside on the same computing node.

In the above embodiment, the progressive coupon scheme is implemented in the context of electronic commerce transactions across a distributed computer system. However, the present invention is not limited to electronic commerce or to distributed computer systems. In other embodiments, the system can operate with conventional paper coupons.

In one embodiment, when a paper coupon is redeemed as part of a purchase transaction at a store, a computer system at the store automatically prints a subsequent coupon for the customer in order to facilitate the progressive coupon scheme.

Computer systems are not even necessary to the invention. In another embodiment, the store maintains a stock of coupons to implement a progressive scheme. When a customer uses a first coupon as part of a purchase transaction, he is given a second coupon. When the customer uses the second coupon, he is given a third coupon, and so on. Note that a computer-based scheme is simpler to administer because, the store does not have to maintain a collection of different coupons.

In yet another embodiment, the customer is given a coupon booklet containing a progression of coupons. When the customer uses the first coupon in the booklet, the customer receives a stamp in his booklet that enables him to use a second coupon, and so on, until all of the coupons in the booklet are used up.

### Coupon Structure

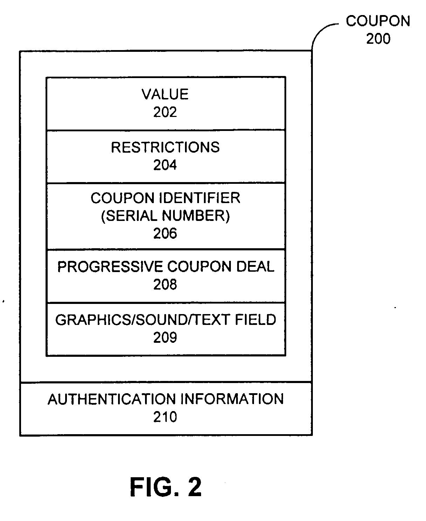

FIG. 2 illustrates part of the structure of a coupon 200 designed for use in a progressive coupon scheme in accordance with an embodiment of the present invention. Coupon 200 includes a number of pieces of information including value 202, restrictions 204, coupon identifier 206, progressive coupon deal 208, graphics/audio/text field 209 and authentication information 210. In one embodiment of the present invention, coupon 200 is represented by an object defined within an object-oriented programming system. In another embodiment, coupon 200 is represented by a physical coupon with the above-listed pieces of information printed or encoded on it.

Value 202 contains the value of the coupon. It may be as simple as "$1.00 off the purchase price" or "two for the price of one." Alternatively, it may be slightly more complicated, such as 10% off the first $100 purchased, and 15% off any amount over the first $100. In general, any imaginable value for coupon 200 can be used.

Restrictions 204 includes information specifying restrictions on the use of the coupon. This information typically includes an expiration date for the coupon and may include other limitations, such as "only one per customer," or "can only be used on Saturdays."

Coupon identifier 206 includes information that identifies the coupon. In some cases, coupon identifier 206 may include a serial number that uniquely identifies a specific coupon. In other cases, coupon identifier 206 may only include information that identifies what type of coupon it is. For example, the coupon identifier 206 might specify that the coupon is the type of coupon that can be applied to purchasing a brand of breakfast cereal.

Progressive coupon deal 208 contains information about successive coupons that can be obtained in exchange for using the instant coupon. This information provides the holder of the coupon with knowledge about the value of future coupons in the progressive scheme. This knowledge will hopefully entice the customer to use the coupons. Alternatively, the value of future coupons can be determined after coupon 200 is issued. In this case, progressive coupon deal 208 indicates where the newly-determined progressive coupon scheme is stored.

Graphics/audio/text field 209 may contain graphics, audio and/or textual information that can function as an advertisement for the product or organization that is the subject of the coupon. For example, field 209 may contain a company logo, a video advertisement, or a textual sales pitch.

Authentication information 210 includes information that can be used to verify that the coupon is authentic. If coupon 200 is in electronic form, authentication information 210 may take the form of a digital signature. For example, a digital signature can be produced by using a private key that is associated with a public key cryptography system to sign the data within the coupon. In another embodiment, the coupon is a physical piece of paper, and the authentication information assumes the form of a special pattern that is printed on the piece of paper, such as a bar code.

As mentioned above, in some embodiments of the present invention, the coupon has an electronic form. It is hard to control the copying of such an electronic coupon, because almost any holder of the coupon can easily make binary copies of the coupon, and can easily distribute the copies to other potential users of the coupon. However, this ease of copying and distribution generally benefits coupon distributors, because much of the cost of implementing a coupon system is involved in printing and distributing copies of the coupon. Distribution of electronic coupons is much easier and cheaper that distribution of paper coupons.

On the other hand, it may be desirable to limit the number of coupons that can be used. For example, a merchant may want to limit use of the coupon to one per customer. This can be accomplished by making the user present some form of identification in order to redeem the coupon. Note that this identification does not necessarily have to identify the customer by name. For example, a customer might be required to present an account number to make a purchase. In this case, use of the coupon can be limited by limiting the number of accounts that are recognized by the system and limiting the number of coupons that can be used with each account. Alternatively, the coupon can be restricted so that only the first 100 copies of the coupon that are presented to the merchant can be redeemed. Even if thousands of copies of the coupon have been distributed, only the first 100 will be honored. In general, many other methods of restricting use of electronic coupons can be used with the present invention.

### Coupon Exchange Process

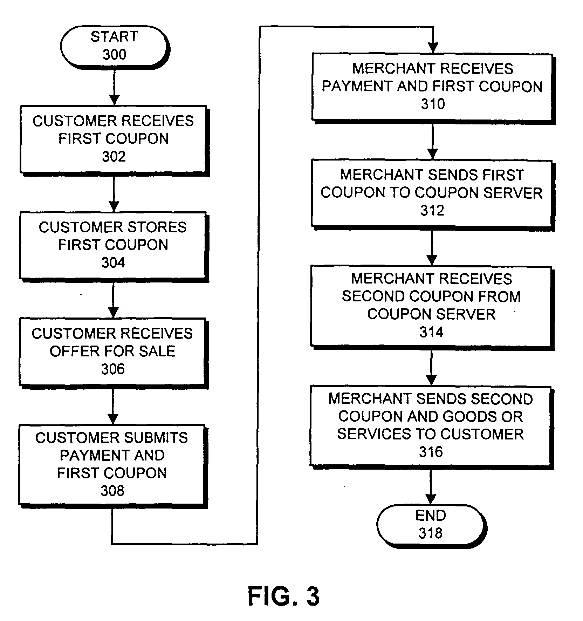

FIG. 3 is a flow chart illustrating how a first coupon is exchanged for a second coupon in accordance with an embodiment of the present invention. The system starts in state 300 and proceeds to state 302. In state 302 a customer, such as a user of customer system 130 from FIG. 1, receives a first coupon. This coupon can be received through an electronic mail communication, or alternatively, may be retrieved by the customer while the customer is browsing through a website, such as website 112 from FIG. 1. The coupon can originate from coupon server 122, and passed on to the customer through an intermediary. The system next proceeds to state 304. In state 304, the system stores the first coupon for later use. This may include storing the first coupon in random access memory or in non-volatile storage, such as on a magnetic disk drive within customer system 130. The system next proceeds to state 306. In state 306, the customer receives an offer for a sale. Again, this offer can take place through an electronic mail communication, or alternatively, through a website, such as website 112.

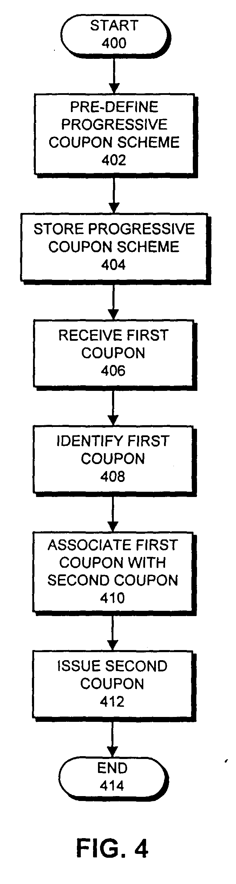

Next, the system proceeds to state 308. In state 308, the customer decides to accept the offer for sale, and submits a payment and the first coupon to the merchant. (This corresponds to step A from FIG. 1) This payment can be made electronically in a number of ways, including through an electronic credit card, an electronic check, or through digital cash. In one embodiment of the present invention, the coupon is stored on a portable electronic device, such as a smart card, which is physically presented at a point of sale. Next, the system proceeds to state 310. In state 310, the merchant receives the payment and the first coupon. The system next proceeds to state 312. In state 312, the merchant sends the first coupon to coupon server 122 from FIG. 1. (This corresponds to step B in FIG. 1.) The system next proceeds to state 314. In state 314, the system receives the second coupon from coupon server 122 in exchange for the first coupon. (This corresponds to step C in FIG. 1) The operations performed by coupon server 122 in exchanging the coupons are described in more detail below with reference to FIG. 4. The system next proceeds to state 316. In state 316, the merchant sends the second coupon and the purchased goods to the customer. (This corresponds to step D from FIG. 1). The system next proceeds to state 318, which is an end state. At the end of this process the customer has a second coupon that can be used to purchase the same, or possibly different, goods and services from the merchant. This above process is repeated for each purchase involving a progressive coupon.

FIG. 4 is a flow chart illustrating how coupon server 122 processes a request for a successive coupon in accordance with an embodiment of the present invention. The system starts at state 400 and proceeds to state 402. In state 402, the system defines a progressive coupon scheme. This can be accomplished by accepting parameters from a merchant that specify how successive coupons in the scheme will be generated. Alternatively, the owner of coupon server 122 can define a number of useful progressive coupon schemes and make these schemes available for merchants to use. The system next proceeds to state 408. In state 408, the system stores the progressive coupon scheme. This can be accomplished by storing the scheme in a database that is accessible by coupon server 122. Alternatively, the scheme can be stored in volatile or non-volatile storage within third party system 120 that can be accessed by coupon server 122.

Next, the system proceeds to state 406. In state 406, the system receives the first coupon from website 112 on merchant system 110. (This corresponds to step B in FIG. 1). The system next proceeds to state 408. In state 408, the system identifies the first coupon by examining identification information in the first coupon. (For example, see coupon identifier 206 from FIG. 2.) The system next proceeds to state 410. In state 410, the system associates the first coupon with the second coupon by looking up the first coupon in the stored progressive coupon scheme. This lookup indicates that the first coupon is to be exchanged for the second coupon. The system next proceeds to state 412. In state 412, the system issues the second coupon and returns it to website 112. (This corresponds to step C in FIG. 1) Additionally, in some embodiments of the present invention, coupon server 122 invalidates the first coupon so that the first coupon cannot be used again. Next, the system proceeds to state 414, which is an end state. The above process is repeated for each subsequent coupon received by coupon server 122.

Not shown in FIG. 4 is what happens if the coupon received from website 112 is invalid. In this case, coupon server 122 returns an error message to website 112 instead of returning the second coupon.

The foregoing descriptions of embodiments of the invention have been presented for purposes of illustration and description only. They are not intended to be exhaustive or to limit the invention to the forms disclosed. Many modifications and variations will be apparent to practitioners skilled in the art. Accordingly, the above disclosure is not intended to limit the invention.

## Claims

1. A method for producing coupons to facilitate a progressive coupon scheme, comprising;
defining (**402**) the progressive coupon scheme, including specifying how to determine how use of a first coupon leads to generation of a second coupon;
storing (**404**) the progressive coupon scheme;
receiving (**310, 406**) the first coupon as part of a transaction wherein a holder of the first coupon uses the first coupon (**308**);
identifying (**408**) the first coupon by examining an identifier in the first coupon;
associating (**410**) the first coupon with the second coupon by referring to the progressive coupon scheme; and
issuing (**412**) the second coupon such that the second coupon can be used in a subsequent transaction.

2. The method of claim 1, wherein the first coupon and the second coupon are electronic coupons and the transaction is an electronic transaction.

3. The method of claim 1 or claim 2, wherein the act of defining (**402**) the progressive coupon scheme includes specifying how use of the second coupon leads to generation of a third coupon.

4. The method of any one of claims 1 to 3, wherein the act of defining (**402**) the progressive coupon scheme includes specifying a claim of coupons, wherein each successive coupon in the chain is generated in response to redemption of a preceding coupon in the chain.

5. The method of any one of claims 1 to 4, wherein the second coupon has a higher monetary value than the first coupon.

6. The method of any one of claims 1 to 5, wherein the second coupon applies to different goods and services that the first coupon.

7. The method of any one of claims 1 to 6, wherein the second coupon is randomly determined.

8. The method of any one of claims 1 to 7, wherein the progressive coupon scheme is dynamic and can be altered at any time.

9. The method of any one of claims 1 to 8, wherein the progressive coupon scheme is unknown to the holder of the first coupon.

10. The method of any one of claims 1 to 9, wherein issuing (**412**) the second coupon includes possibly issuing more than one coupon.

11. The method of any one of claims 1 to 10, wherein receiving (**406**) the first coupon includes receiving the first coupon on a smart card that can be used at a point of sale.

12. The method of any one of claims 1 to 11, further comprising receiving a user identifier with the first coupon, and wherein associating (**410**) the first coupon with the second coupon includes using the user identifier and the first coupon to select the second coupon.

13. The method of any one of claims 1 to 12, further comprising invalidating the first coupon so that the first coupon cannot be used again.

14. The method of any one of claims 2 to 13, wherein the first coupon and the second coupon may be communicated through a communication channel (**100**).

15. The method of any one of claims 1 to 14, wherein the holder of the first coupon is a human being.

16. The method of any one of claims 2 to 15, wherein the holder of the first coupon is a computer system (**130**).

17. A computer readable storage medium storing instructions that when executed by a computer cause the computer to perform a method for producing coupons to facilitate a progressive coupon scheme, comprising:
defining (**402**) the progressive coupon scheme, including specifying how to determine how use of a first coupon leads to generation of a second coupon;
storing (**404**) the progressive coupon scheme;
receiving (**406**) the first coupon as part of a transaction wherein a holder of the first coupon uses the first coupon;
identifying (**408**) the first coupon by examining an identifier in the first coupon;
associating (**410**) the first coupon with the second coupon by referring to the progressive coupon scheme; and
issuing (**412**) the second coupon such that the second coupon can be used in a subsequent transaction by the holder of the first coupon.

18. An apparatus that produces coupons to facilitate a progressive coupon scheme, comprising:
a computer system (**120**) that generates coupons;
a storage unit, within the computer system, that stores (**404**) a progressive coupon scheme specifying how to determine how use of a first coupon leads to generation of a second coupon;
an input, coupled to the computer system, that receives (**406**) the first coupon from a transaction wherein a holder of the first coupon uses the first coupon;
an association mechanism, coupled to the input, that associates (**410**) the first coupon with the second coupon by referring to the progressive coupon scheme; and
an issuing means, within the computer system, that issues (**412**) the second coupon such that the second coupon can be used in a subsequent transaction.

19. The apparatus of claim 18, wherein the first coupon and second coupon are electronic coupons.

20. The apparatus of claims 18 or 19, wherein the progressive coupon scheme specifies how use of the second coupon leads to generation of a third coupon.

21. The apparatus of any one of claims 18 to 20, wherein the progressive coupon scheme specifies a chain of coupons, wherein each successive coupon in the chain is generated in response to redemption of a preceding coupon in the chain.

22. The apparatus of any one of claims 18 to 21, wherein the second coupon has a higher monetary value than the first coupon.

23. The apparatus of any one of claims 18 to 22, wherein the second coupon applies to different goods and services than the first coupon.

24. The apparatus of any one of claims 18 to 23, wherein a value of the second coupon is randomly determined.

25. The apparatus of any one of claims 18 to 24, wherein the progressive coupon scheme in dynamic and can be altered at any time.

26. The apparatus of any one of claims 18 to 25, wherein the progressive coupon scheme is unknown to the user of the first coupon.

27. The apparatus of any one of claims 18 to 26, wherein the issuing means is configured to issue possibly more than one coupon.

28. The apparatus of any one of claims 18 to 27, wherein the input is configured to receive the first coupon from a smart card at a point of sale.

29. The apparatus of any one of claims 18 to 28, wherein the association means is configured to receive a user identifier with the first coupon, and to use the user identifier and the first coupon to select the second coupon.

30. The apparatus of any one of claims 18 to 29, further comprising an invalidation means that invalidates the first coupon so that the first coupon cannot be used again.

31. The apparatus of any one of claims 19 to 30, wherein the first coupon and the second coupon can be communicated through a communication channel (**100**).

32. The apparatus of any one of claims 18 to 32, wherein the holder of the first coupon is a human being.

33. The apparatus of any one of claims 18 to 31, wherein the holder of the first coupon is a computer system (**130**).

34. A data structure contained on a computer readable storage medium for implementing a first coupon (**200**) that is part of a progressive coupon scheme, comprising:
a value specifier (**202)** that specifies the value of the first coupon in a transaction;
a restriction specifier (**204**) that specifies restriction on use of the first coupon;
an authentication field (**210**) that contains data that can be used to authenticate the first coupon; and
a progressive field (**208**) that specifies parameters of a second coupon that will be received upon redemption of the first coupon.

35. The data structure of claim 34, further comprising a coupon identifier (**206**) that identifies the coupon.

36. The data structure of claim 34 or claim 35, wherein the authentication field (**210**) includes a message digest digitally signed with a private key associated with public key cryptography system.

37. The data structure of any one of claims 34 to 36, wherein the second coupon has a higher monetary value than the first coupon.

38. The data structure of any one of claims 34 to 37, wherein the second coupon applies to different goods and services than the first coupon.

39. The data structure of any on of claims 34 to 38, wherein a value of the second coupon is randomly determined.

40. A computer program encoding a set of computer instructions for producing coupons to facilitate a progressive coupon scheme, which when running on a computer is adapted to perform the method as claimed in any one of claims 1 to 16.
